# EUROPÄISCHE PATENTSCHRIFT

(11) **EP 0 788 754 B1**
(45) Veröffentlichungstag und Bekanntmachung des Hinweises auf die Patenterteilung: **28.07.1999**
(21) Anmeldenummer: 96120029.2
(22) Anmeldetag: 13.12.1996
(51) Int. Cl.: A47J 36/20, A47J 27/04

(54) **Dampfkochgerät**
Steam cooking appliance
Dispositif de cuisson à la vapeur

(30) Priorität: 08.02.1996 DE 19604598
(43) Veröffentlichungstag der Anmeldung: 13.08.1997
(73) Patentinhaber: Braun Aktiengesellschaft, Frankfurt am Main (DE)
(72) Erfinder: Winter, Florina, 65934 Frankfurt am Main (DE); Hoffmann, Günther, 65719 Hofheim (DE); Oppermann, Günter, 63128 Dietzenbach (DE)

(56) Entgegenhaltungen:
- DE-U- 29 517 948
- US-A- 5 275 094
- US-A- 5 404 803

## Beschreibung

Die Erfindung betrifft ein Dampfkochgerät nach dem Oberbegriff des Patentanspruchs 1.

Ein derartiges Dampfkochgerät ist beispielsweise aus der US-A-5,275,094 bekannt. Bei diesem Dampfkochgerät ist in den ersten Behälter mindestens ein weiterer zweiter Behälter einsetzbar, um hierdurch verschiedene Nahrungsmittel gleichzeitig garen zu können. Die Durchlässe des ersten und zweiten Behälters fluchten zueinander. Die Böden des ersten und zweiten Behälters sind derart wellenförmig ausgebildet, daß in ein Wellental des Bodens des ersten Behälters ein Wellenberg des Bodens des zweiten Behälters eingreift. Hierdurch wird es möglich, daß der Boden des zweiten Behälters paßgenau der Kontur des ersten Behälters folgt, so daß auch zwischen den zugewandten Flächen der Böden nur ein geringer Spalt gebildet wird. Hierdurch ist es möglich, daß aufgrund der in diesem Spalt entstehenden Kapillarwirkung das aus den Durchlässen des zweiten Behälters abtropfende Kondensat in den zwischen den beiden Böden ausgebildeten Spalt gelangt und dort festgehalten wird. Erst dann, wenn der ganze Spalt zwischen den Böden des ersten und zweiten Behälters mit Kondensat verschlossen ist, fließt das überschüssige Wasser über die Durchlässe des ersten Bodens in die darunter befindliche Auffangschale und wird dort gesammelt.

Werden beispielsweise bei einem derartigen Dampfkochgerät Nahrungsmittel verwendet, die stark färbende Stoffe abgeben, wie beispielsweise Karotten, Rote Beete oder Paprika, so wird bei Verwendung eines das Licht reflektierenden Kunststoffbehälters dieser insbesondere am Boden derart verfärbt, daß sie ein unschönes Aussehen erlangen. Auch mit einer nachträglichen Reinigung läßt sich der in den Kunststoff eingedrungene Farbstoff nicht wieder entfernen.

Aufgabe der Erfindung ist es daher, ein Dampfkochgerät zu schaffen, bei dem auch beim Garen von einen intensiven Farbstoff abgebenden Nahrungsmitteln der einen Teil der Außenwandung des Dampfkochgerätes bildende erste Behälter in seinem Bodenbereich nicht dauerhaft verfärbt wird.

Diese Aufgabe wird erfindungsgemäß durch die Merkmale des kennzeichnenden Teils des Patentanspruchs 1 gelöst. Durch den erfindungsgemäßen Spalt von 1 mm bis 3 mm, der also so groß bemessen ist, daß hier keine Kapillarwirkung einsetzen kann und durch die Dimensionierung der Durchlässe zueinander, fließt auch kein gefärbtes Kondensat in den Spalt, so daß sich der erste Behälter auch nicht verfärben kann. Dies ist insbesondere dann von Vorteil, wenn die Außenwand des ersten Behälters gleichzeitig Teil der Außenwand des Dampfkochgerätes ist und in seiner Farbe diesem Dampfkochgerät angepaßt sein muß. Der zweite Behälter besteht entweder aus einem nicht färbbaren Kunststoff jeglicher Farbe oder aus einem schwarzen Kunststoff.

Nach den Merkmalen des Patentanspruchs 2 hat sich ein Abstand zwischen den beiden Böden des ersten und zweiten Behälters von vorzugsweise 2 bis 3 mm, als vorteilhaft ergeben. Durch diesen Abstand ergibt sich ein Ringspalt zwischen den beiden Behältern, der so groß bemessen ist, daß sich dort kein Wasser festsetzen kann, das zu Verfärbung des Bodens des ersten Behälters führen könnte. Durch die gezielt vorgegebene Spaltbreite wird der Spalt zwischen den Behältern von dem aufsteigenden Dampf lediglich durchströmt und er bleibt demnach frei von gefärbtem Kondensat.

Nach den Merkmalen des Patentanspruchs 3 wird der Abstand durch Abstandselemente gebildet, die entweder am Boden des ersten oder zweiten Behälters ausgebildet sind. Sind sie am Boden des ersten Behälters ausgebildet, so erstrecken sie sich von der Innenwand des ersten Behälters nach oben, sind sie am Boden des zweiten Behälters ausgebildet, so erstrecken sie sich von der Außenwand des zweiten Behälters zum Boden des ersten Behälters hin.

Um den Spaltabstand der beiden, Böden der Behälter genau einzuhalten, ist es auch möglich, den zweiten Behälter im ersten Behälter einzuhängen (Anspruch 4).

Damit erst gar nicht das aus den Durchlässen des zweiten Behälters abfließende Kondensat den Boden des ersten Behälters berührt, sind die Merkmale des Patentanspruchs 5 vorgesehen. Durch diese Maßnahme fallen die Tropfen direkt durch die Durchlässe des ersten Behälters in die Auffangschale ab, ohne dabei wesentlich die Durchlässe des ersten Behälters zu berühren.

Nach den Merkmalen des Patentanspruchs 6 sind die Durchlässe des zweiten Behälters von gegenüber dem Boden erhabenen Ringbunden umgeben, damit das Abtropfen des Kondensats erleichtert wird. Durch Wahl einer scharfen Abreißkante (Anspruch 8) wird das Abtropfen noch erleichtert. Auch hier kann die äquivalente Lösung, also eine umgekehrte Ausbildung der Ringbunde, gewählt werden.

Dadurch, daß nach den Merkmalen des Anspruchs 9 ein das Licht absorbierender, also schwarzer Behälter, in den ersten das Licht reflektierenden, also beispielsweise weißen Kunststoffbehälter eingesetzt wird und gleichzeitig der Abstand zwischen den Böden des ersten und zweiten Behälters so groß bemessen ist, daß sich beim Abtropfen zwischen den Böden kein Wasser ansammeln kann, bleibt der Boden des ersten Behälters frei von Farbstoffen, so daß, wenn dann noch für den ersten Behälter ein weißer Kunststoffbehälter gewählt wird, dieser für eine Bedienungsperson stets hygienisch sauber aussieht. Zwar verfärbt sich das Innere des zweiten Behälters durch die von den Nahrungsmitteln abgegebenen Farbstoffe, da aber dieser zweite Behälter aus das Licht absorbierendem, also schwarzem Kunststoff besteht (Anspruch 9), kann eine Bedienungsperson die hier eingetretene Farbänderung im Bodenbereich nicht erkennen, so daß zumindest optisch dieser schwarze Behälter so aussieht, als ob er nicht durch einen von den Nahrungsmitteln abgebenen Farbstoff verfärbt ist und daher "verschmutzt" aussieht.

Ein Ausführungsbeispiel der Erfindung ist in der Zeichnung dargestellt und wird im folgenden näher erläutert. Es zeigen:
- Fig. 1: einen Längsschnitt durch ein Dampfkochgerät gemäß der Schnittführung A-A nach Fig. 2 und
- Fig. 2: eine Draufsicht von oben auf das Dampfkochgerät nach Fig. 1.

Das Dampfkochgerät 1 besteht aus einem auf einer Abstellfläche 3 abstellbaren Gerätesockel 2, der aus einem kastenförmigen Gehäuse 4 mit einem Boden 5 besteht. Das kastenförmige und oval verlaufende Gehäuse 4 weist einen im wesentlichen über seine Grundfläche sich erstreckenden Wassertank 6 auf, von dessen Boden 5 sich in den Raum des Wassertanks 6 mittig ein Dom 7 erstreckt, in dem eine in der Zeichnung nicht näher dargestellte elektrische Heizeinrichtung ausgebildet ist.

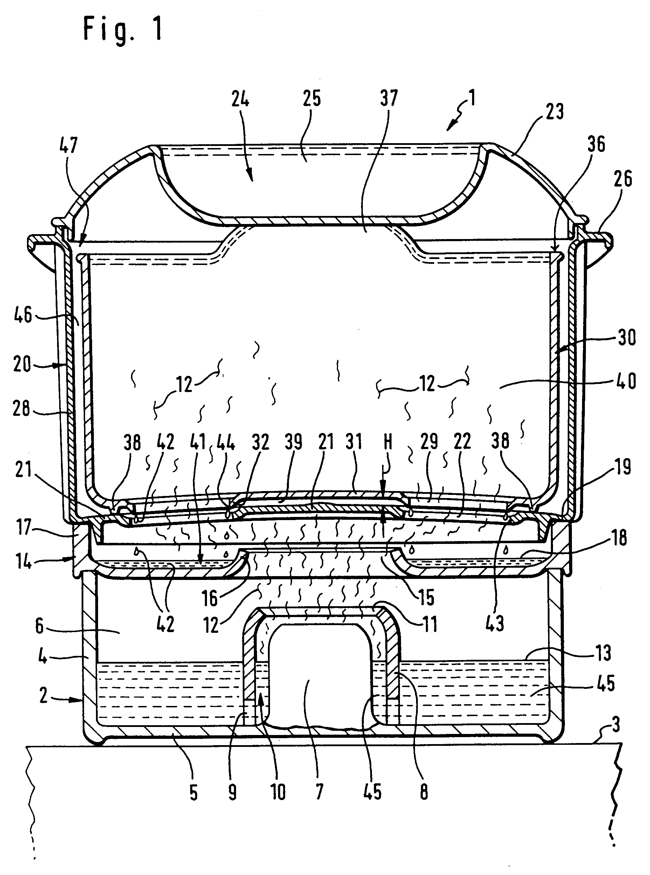

Der Dom 7 ist nach Fig. 1 im wesentlichen rund oder oval ausgebildet und wird von einer umlaufenden und aus dem Wassertank zur besseren Reinigung abnehmbaren Wand 8 umgeben, die an ihrem Boden am Umfang verteilte Schlitze 9 aufweist. Die Wand 8 weist einen geringen Abstand zum Dom 7 auf, so daß sie mit dem Dom eine Ringkammer 10 bildet, in die über die Schlitze 9 Wasser aus dem Wassertank 6 nachfließen kann, wenn bei der Erhitzung des Doms 7 das in der Ringkammer 10 befindliche Wasser 45 verdampft. Die Bildung der im Volumen verhältnismäßig kleinen Ringkammer 10 dient dazu, daß nicht das ganze Wasser im Wassertank 6 erhitzt werden muß, sondern nur das in der Ringkammer 10 befindliche Wasser. Hierdurch kann in sehr kurzer Zeit das in der Ringkammer 10 befindliche Wasser erhitzt und besonders wirkungsvoll verdampft werden.

Die Wand 8 weist gemäß Fig. 1 nach oben eine Öffnung 11 auf, über die der in der Ringkammer 10 gebildete Dampf, wie er durch die S-förmigen Linien 12 dargestellt ist, nach oben ausströmt. Die Größe der Schlitze 9 sind so bemessen, daß stets der im Wassertank 6 vorhandene Wasserspiegel 13 auch in der Ringkammer 10 vorhanden ist.

Das Gehäuse 4 ist von einer Auffangschale 14 verschlossen, die, konzentrisch zur Öffnung 11 der Wand 8 verlaufend, ebenfalls eine Öffnung 15 aufweist, die an ihrem Rand einen nach oben sich erstreckenden Ringbund 16 aufweist. Die Außenwand 17 der Auffangschale 14 erstreckt sich geringfügig nach oben und ist in ihrer Höhe wesentlich geringer als die Höhe des Gehäuses 4 des Wassertanks 6. Die Auffangschale 14 dient dazu, das abtropfende Kondensat 42 als Flüssigkeit aufzufangen, wie sie durch den Wasserspiegel 18 angedeutet ist. Hierdurch wird vermieden, daß das Kondensat 42 wieder in den Wassertank 6 zurückfließt und erneut von dem Dom 7 erhitzt und verdampft wird, was zu einer unangenehmen Geruchsbildung und unnötigen Geschmacksintensivierung der Nahrungsmittel führen würde.

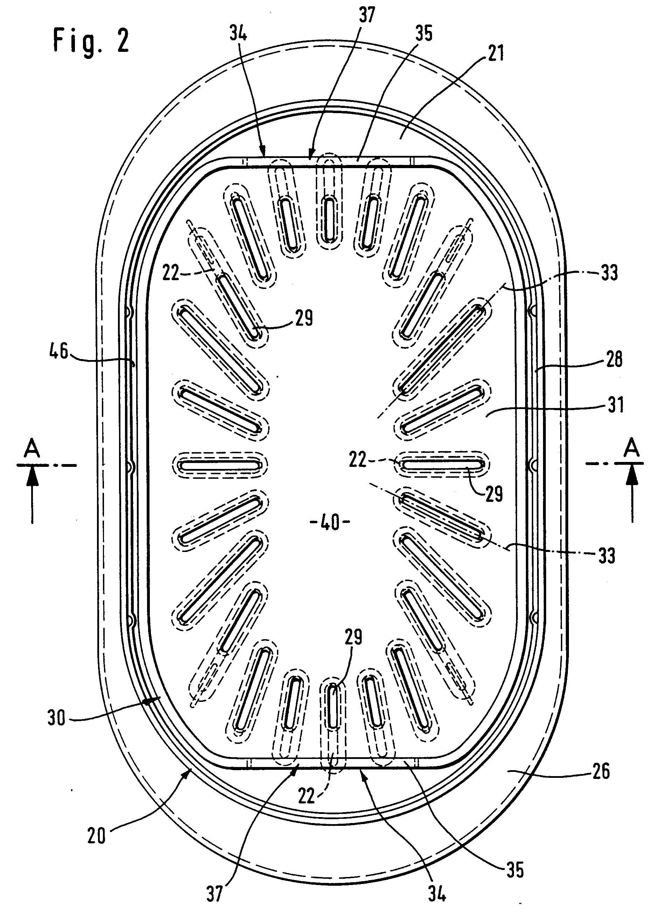

Am äußeren Rand 19 der Außenwand 17 stützt sich ein erster Behälter 20 ab, der in seinem Boden 21 oval oder rund oder sontswie im Querschnitt verlaufende Durchlässe 22 aufweist, wie dies aus Fig. 2 hervorgeht. Die Durchlässe 22 sind vorteilhafterweise außerhalb des von den Öffnungen 11 und 15 nach oben auf den Boden 21 projizierten Bereiches ausgebildet, damit der Dampf 12 einerseits den Boden 21 besser erwärmt und andererseits nicht aus dem ersten Behälter 20 abtropfendes Kondensat 42 direkt auf den Dom 7 fällt. Die Umlenkung des Dampfes 12 hat auch den Vorteil, daß sich dieser zu beiden Seiten des ersten Behälters 20 am Boden 21 gleichmäßig nach außen verteilt.

Der erste Behälter 20 besteht vorzugsweise aus das Licht reflektierendem, weißem Kunststoff, wie Polypropylen, und dessen Kammer 47 dient, wenn keine farbabgebenden Nahrungsmittel, wie Karotten, Paprika oder Rote Beete, verwendet werden, zur Aufnahme von sonstigen Nahrungsmitteln, die durch Dampf 12 gegart werden sollen. Der erste Behälter 20 ist über einen vorzugsweise aus transparentem Kunststoff hergestellten Deckel 23 verschlossen, der mittig eine Vertiefung 24 mit einem Handgriff 25 aufweist. In Fig. 2 wurde die Draufsicht auf das Dampfkochgerät 1 ohne den in Fig. 1 dargestellten Deckel 23 vorgenommen.

Der erste Behälter 20 weist an seinem oberen Rand einen radial nach außen hervorstehenden Ringbund 26 auf, der zur besseren Handhabung des ersten Behälters 20 dient und der Verbrennungen einer Hand bei noch heißem ersten Behälter 20 vermeidet.

Wie Fig. 2 deutlich zeigt, nehmen die Wand 28 des ersten Behälters 20 sowie die Außenwand 17 der Auffangschale 14 und das Gehäuse 4 des Gerätesockels 2 eine ovale Grundform ein, damit bei möglichst geringer Tiefe möglichst viel Nahrungsmittel von dem ersten Behälter 20 und möglichst viel Wasser von der Auffangschale 17 und dem Wassertank 6 aufgenommen werden können.

Wie aus Fig. 1 weiterhin ersichtlich ist, ist in die Kammer 47 des ersten Behälters 20 ein zweiter Behälter 30 eingesetzt, der an seinem Boden 31 Durchlässe 29 aufweist, die mit ihrem nach unten hervorstehenden Rand 32 in die Durchlässe 22 des Bodens 21 des ersten Behälters 20 geringfügig eingreifen. Die Durchlässe 29 sind auf gleicher Höhe und gleicher Anordnung wie die Durchlässe 22 des ersten Behälters 20 ausgebildet, damit diese über ihre Achsen 33 fluchten, wie dies Fig. 2 deutlich zeigt.

Gemäß Fig. 2 ist der zweite Behälter 30 an seinem oberen und unteren Ende 34 der Wand 35 in radialer Richtung abgeflacht und erstreckt sich im Mittenbereich über die normale Höhe 36 des zweiten Behälters 30 hinaus und bildet somit einen Handgriff 37 für den zweiten Behälter 30. Der zweite Behälter 30 ist aus das Licht absorbierendem, schwarzem Kunststoff hergestellt und dessen Raum 40 dient vorwiegend zur Aufnahme von Nahrungsmitteln, wie Karotten, Paprika oder Rote Beete, die beim Garen Farbstoff dem Wasser zugeben, der den Kunststoff verfärbt.

Der zweite Behälter 30 weist an seinem Boden 31 nach unten gerichtete Abstandselemente 38 auf, die sich an der Innenseite des Bodens 21 des ersten Behälters 20 abstützen, wodurch zwischen den Böden 31, 21 ein Spalt 39 entsteht, dessen Höhe H gleich 1 mm oder größer, vorzugsweise 2 mm, beträgt. Hierdurch wird vermieden, daß sich der Spalt 39 mit Kondensat 42 zusetzt, das von Farbstoffen der Nahrungsmittel getränkt ist und somit ein sichtbares Verfärben der Innenseite des Bodens 21 des ersten Behälters 20 verursachen würde, wenn der erste Behälter 20 aus hellem oder gar weißem reflektierendem Kunststoff besteht. Zwar verfärbt sich auch der schwarze zweite Behälter 30, doch kann diese Verfärbung eine Bedienungsperson nicht erkennen, da das Licht aufgrund des schwarzen Kunststoffs die Färbung nicht oder nur sehr schwach reflektiert. Der zweite Behälter 30 kann aber auch aus nicht färbendem Kunststoff oder sonstigem Material hergestellt sein.

Die Wirkungsweise des erfindungsgemäßen Dampfkochgeräts ist folgende:

Nachdem der Wassertank 6 bis zu seiner Maximalmarke (nicht dargestellt) mit Wasser gefüllt ist und gleichzeitig nach Fig. 1 der Raum 40 des schwarzen zweiten Behälters 30 beispielsweise mit Paprika gefüllt ist, kann das Dampfkochgerät 1 über einen nicht dargestellten elektrischen Schalter eingeschaltet werden. Nunmehr erhitzt sich der mit einer in der Zeichnung nicht dargestellten Heizeinrichtung versehene Dom 7 derart, daß das in der Ringkammer 10 befindliche Wasser 45 zu kochen beginnt und verdampft.

Der Dampf 12 dringt über die Öffnung 11, die Öffnung 15, die Durchlässe 22, den Spalt 39 und die Durchlässe 29 in den Raum 40 des zweiten Behälters 30 ein und erwärmt die dort befindlichen Nahrungsmittel (nicht dargestellt). Es strömt auch Dampf 12 über den Spalt 39 und den Spalt 46 zwischen den beiden Behältern 20, 30 nach oben. Der Spalt 46 ist Teil der Kammer 47 des ersten Behälters 20.

Sobald der Dampf 12 die Nahrungsmittel berührt, gibt er seine Wärme an die Nahrungsmittel ab und kondensiert dabei. Das Kondensat 42 tropft wiederum über die Durchlässe 29, 22 in den Raum 41 der Auffangschale 14 ab und wird dort gesammelt. Da der Spalt 39 größer bemessen ist, als dies für das Eindringen von Wasser in den Spalt 39 durch Auftreten von Kapillarwirkung erforderlich wäre, tropft das Kondensat 42 am Rand 32 der Durchlässe 29 ab, ohne dabei in Tropfenform in den Spalt 39 einzudringe. Dies wird vorteilhafterweise noch dadurch begünstigt, daß der Rand 32 der Durchlässe 29 im Durchmesser kleiner bemessen ist, als der innere Rand 43 der Durchlässe 22. Ein besseres Abtropfen wird auch noch dadurch erzielt, daß der Rand 32 an seinem nach unten gerichteten freien Ende 44 verhältnismäßig scharfkantig ausgebildet ist. Würde sich beim Einsetzen des inneren Behälters 30 tatsächlich einmal ein Tropfen 42 zwischen dem Spalt 39 ablagern, so würde dieser im Laufe der Dampfbeaufschlagung aufgelöst werden, da auch Dampf 12 einerseits durch den Spalt 39 dringt und Wärme an den Tropfen 42 abgibt und andererseits bei der Dampfbeaufschlagung der Boden 21 sich so stark erwärmt, daß oberhalb des Bodens 21 im Spalt 39 befindliche Tropfen auch hierdurch verdampfen. Der Spalt 39 ist Teil der Kammer 47 des ersten Behälters 20.

Durch die Ausbildung eines größeren Spaltes zwischen dem Boden 21 des ersten Behälters 20 und dem Boden 31 des zweiten Behälters 30 wird vermieden, daß der Boden 21 des ersten Behälters 20 sich durch stark färbende Nahrungsmittel verfärbt, wenn der Spalt 39 nur groß genug ist. Hierdurch wird bei der Verwendung eines schwarzen zweiten Kunststoffbehälters 30 dieser nicht verfärbt.

## Patentansprüche

1. Dampfkochgerät (1) zum Garen von Nahrungsmitteln mit einem in einem Gerätesockel (2) ausgebildeten Wassertank (6), in dem Wasser von einer elektrischen Heizeinrichtung zu Dampf erhitzt wird, der über im Boden (21) eines ersten Behälters (20) ausgebildete erste Durchlässe (22) in eine Kammer (47) des ersten Behälters (20) einströmt, wobei zumindest die Innenwand des ersten Behälters (20) aus Kunststoff besteht und wobei in den ersten Behälter (20) ein zweiter Behälter (30) mit an seinem Boden (31) ausgebildeten zweiten Durchlässen (29) einsetzbar ist, die im wesentlichen mit den ersten Durchlässen (22) fluchten und wobei der Boden (21) des ersten Behälters (20) zum Boden (31) des zweiten Behälters (30) einen Abstand (H) aufweist,
**dadurch gekennzeichnet**,
daß der Rand (32) der Durchlässe (29) des zweiten Behälters (30) im Durchmesser kleiner bemessen ist als der innere Rand (43) der Durchlässe (22) des ersten Behälters (20), daß der Abstand (H) des Bodens (21) des ersten Behälters (20) zum Boden (31) des zweiten Behälters (30) zumindest im Bereich der Durchlässe (29, 22) zwischen 1 mm und 3 mm beträgt, so daß das aus dem zweiten Behälter (30) über seine Durchlässe (29) abfließende Kondensat (42) nicht mit dem Boden (21) in Berührung gelangt, sondern über die ersten Durchlässe (22) aus dem ersten Behälter (20) abfließt.

2. Dampfkochgerät nach Anspruch 1,
**dadurch gekennzeichnet**,
daß der mittlere Abstand (H) zwischen dem ersten (21) und zweiten (31) Boden vorzugsweise 2 bis 3 mm, beträgt.

3. Dampfkochgerät nach Anspruch 2,
**dadurch gekennzeichnet**,
daß der Abstand (H) durch Abstandselemente (38) gebildet wird, die entweder am Boden (21) des ersten (20) oder am Boden (31) des zweiten (30) Behälters hervorstehen, auf denen sich dieser (30) abstützt.

4. Dampfkochgerät nach Anspruch 2,
**dadurch gekennzeichnet**,
daß der zweite Behälter (30) in die Kammer (47) des ersten Behälters (20) so eingehängt ist, daß ein Abstand (H) zwischen dem Boden (21) des ersten (20) und dem Boden (31) des zweiten (30) Behälters gebildet wird.

5. Dampfkochgerät nach Anspruch 1,
**dadurch gekennzeichnet**,
daß im eingesetzten Zustand des zweiten Behälters (30) im ersten Behälter (20) die Durchlässe (29) des zweiten Behälters (30) in den Raum der Durchlässe (22) des ersten Behälters (20) eindringen.

6. Dampfkochgerät nach Anspruch 1,
**dadurch gekennzeichnet**,
daß die dem Boden (21) des ersten Behälters (20) zugewandten Ränder der Durchlässe (29) des zweiten Behälters (30) von einem Ringbund (32) begrenzt sind.

7. Dampfkochgerät nach Anspruch 6,
**dadurch gekennzeichnet**,
daß der Ringbund (32) der Durchlässe (29) am zweiten Behälter (31) in die Ausnehmungen der Durchlässe (22) des ersten Behälters (20) eingreifen.

8. Dampfkochgerät nach Anspruch 6 oder 7,
**dadurch gekennzeichnet**,
daß das freie Ende der Ringbunde (32) von einer scharfen Abreißkante (44) gebildet sind.

9. Dampfkochgerät nach Anspruch 1,
**dadurch gekennzeichnet**,
daß der erste Behälter (20) aus einem das Licht reflektierenden Kunststoff und der zweite Behälter (30) aus einem das Licht absorbierenden Kunststoff besteht.

## Claims

1. Pressure-cooker (1) for cooking foods which includes a water reservoir (6) in an appliance base (2) in which water is heated by an electric heating device to produce steam which enters through first passages (22) provided in a bottom (21) of a first basket (20) into a chamber (47) of the first basket (20), wherein at least the inside wall of the first basket (20) is made of plastics, and wherein a second basket (30) having second passages (29) in its bottom (31) can be inserted into the first basket (20), the said second passages (29) being generally in alignment with the first passages (22), and wherein the bottom (21) of the first basket (20) has a distance (H) from the bottom (31) of the second basket (30),
**characterized** in that the rim (32) of the passages (29) of the second basket (30) is smaller in diameter than the inside rim (43) of the passages (22) of the first basket (20), in that the distance (H) of the bottom (21) of the first basket (20) from the bottom (31) of the second basket (30) ranges between 1 mm and 3 mms at least in the area of the passages (29, 22) so that the condensate (42) which is discharged from the second basket (30) through its passages (29) will not get into contact with the bottom (21) but flows off through the first passages (22) of the first basket (20).

2. Pressure-cooker as claimed in claim 1,
**characterized** in that the mean distance (H) between the first (21) and the second (31) bottom preferably amounts to 2 to 3 mms.

3. Pressure-cooker as claimed in claim 2,
**characterized** in that the distance (H) is provided by spacer elements (38) which project either from the bottom (21) of the first basket (20) or from the bottom (31) of the second basket (30) on which the latter basket (30) is supported.

4. Pressure-cooker as claimed in claim 2,
**characterized** in that the second basket (30) is hung into the chamber (47) of the first basket (20) so that a distance (H) is produced between the bottom (21) of the first basket (20) and the bottom (31) of the second basket (30).

5. Pressure-cooker as claimed in claim 1,
**characterized** in that when the second basket (30) is inserted into the first basket (20), the passages (29) of the second basket (30) enter into the space of the passages (22) of the first basket (20).

6. Pressure-cooker as claimed in claim 1,
**characterized** in that the rims of the passages (29) of the second basket (30) are defined by an annular collar (32), the said rims facing the bottom (21) of the first basket (20).

7. Pressure-cooker as claimed in claim 6,
**characterized** in that the annular collar (32) of the passages (29) on the second basket (31) engages into the clearances of the passages (22) of the first basket (20).

8. Pressure-cooker as claimed in claim 6 or claim 7, **characterized** in that the free end of the annular collars (32) is formed by a sharp
edge (44).

9. Pressure-cooker as claimed in claim 1,
**characterized** in that the first basket (20) is made of a light-reflecting plastics material and the second basket (30) is made of a light-absorbing plastics material.

## Revendications

1. Dispositif de cuisson à la vapeur (1) pour cuire des mets, comportant un réservoir d'eau (6) prévu dans le socle (2) du dispositif et dans lequel de l'eau est chauffée par un appareil chauffant électrique pour donner de la vapeur qui, par l'intermédiaire de premiers passages (22) prévus dans le fond (21) d'un premier récipient (20), pénètre dans une chambre (47), du premier récipient (20), dans lequel au moins la paroi intérieure du premier récipient (20) est constituée de plastique et dans lequel on peut insérer dans le premier récipient (20) un second récipient (30) présentant des seconds passages (29) qui sont prévus sur son fond (21) et sont sensiblement alignés avec les premiers passages (22) et dans lequel le fond (21) du premier récipient (20) présente, avec le fond (31) du second récipient (30), une distance (H),
caractérisé
par le fait que le diamètre du bord (32) des passages (29) du second récipient (30) est inférieur à celui du bord intérieur (43) des passages (22) du premier récipient (20), que la distance (H) entre le fond (21) du premier récipient (20) et le fond (31) du second récipient (30) vaut, au moins dans la zone des passages (29, 22), entre 1 mm et 3 mm, de sorte que le condensat (42) qui s'écoule du second récipient (30) par les passages (29) ne vient pas en contact avec le fond (21) mais s'écoule hors du premier récipient (20) par les premiers passages (22).

2. Appareil de cuisson à la vapeur selon la revendication 1,
caractérisé
par le fait que la distance médiane (H) entre le premier (21) et le second (31) fonds vaut de préférence 2 à 3 mm.

3. Appareil de cuisson à la vapeur selon la revendication 1,
caractérisé
par le fait que la distance (H) est formée par des écarteurs (38) qui saillent soit sur le fond (21) du premier (20) récipient, soit sur le fond (31) du second (30) récipient et sur lesquels ce second récipient (30) s'appuie.

4. Appareil de cuisson à la vapeur selon la revendication 2,
caractérisé
par le fait que le second récipient (30) est suspendu dans la chambre (47) du premier récipient (20) de façon qu'une distance (H) apparaisse entre le fond (21) du premier (20) récipient et le fond (31) du second (30) récipient.

5. Appareil de cuisson à la vapeur selon la revendication 1,
caractérisé
par le fait qu'à l'état inséré du second récipient (30) dans le premier récipient (20), les passages (29) prévus dans le second récipient (30) pénètrent dans l'espace des passages (22) prévus dans le premier récipient (20).

6. Appareil de cuisson à la vapeur selon la revendication 1,
caractérisé
par le fait que les bords, orientés vers le fond (21) du premier récipient (20), des passages (29) prévus dans le second récipient (30) sont limités par un collet annulaire (42).

7. Dispositif de cuisson à la vapeur selon la revendication 6,
caractérisé
par le fait que le collet annulaire (32) des passages (22) prévus dans le second récipient (31) pénètre dans les évidements des passages (22) prévus dans le premier récipient (20).

8. Appareil de cuisson à la vapeur selon la revendication 6 ou 7 ,
caractérisé
par le fait que l'extrémité libre des collets annulaires (32) est formée par une arête vive de rejet d'eau (44).

9. Dispositif de cuisson à la vapeur selon la revendication 1,
caractérisé
par le fait que le premier récipient (20) est constitué d'un plastique réfléchissant la lumière et que le second récipient (30) l'est d'un plastique absorbant la lumière
